# EUROPÄISCHE PATENTSCHRIFT

(11) **EP 3 298 295 B1**
(45) Veröffentlichungstag und Bekanntmachung des Hinweises auf die Patenterteilung: **10.07.2019**
(21) Anmeldenummer: 16723253.7
(22) Anmeldetag: 18.05.2016
(51) Int. Cl.: F16D 13/75, F16D 25/08

(54) **KUPPLUNGSAKTUATOR MIT AUTOMATISCHEM VERSCHLEISSAUSGLEICH**
CLUTCH ACTUATOR WITH AUTOMATIC WEAR COMPENSATION
ACTIONNEUR D'EMBRAYAGE À RATTRAPAGE AUTOMATIQUE DE L'USURE

(30) Priorität: 19.05.2015 DE 102015107787
(43) Veröffentlichungstag der Anmeldung: 28.03.2018
(73) Patentinhaber: KNORR-BREMSE Systeme für Nutzfahrzeuge GmbH, 80809 München (DE)
(72) Erfinder: WINTER, Simon, 81241 München (DE); SCHUDY, Jürgen, 85256 Vierkirchen (DE); KOCH, Alexander, 81829 München (DE)
(86) Internationale Anmeldenummer: PCT/EP2016/000826
(87) Internationale Veröffentlichungsnummer: WO 2016/184569

(56) Entgegenhaltungen:
- FR-A1- 2 995 374
- GB-A- 1 188 893
- US-A- 3 946 845

## Beschreibung

Die Erfindung betrifft einen Kupplungsaktuator mit automatischem Verschleißausgleich zur vorzugsweisen Betätigung einer im unbetätigten Zustand geschlossenen Anfahrkupplung für Fahrzeuge.

### Stand der Technik

Eine Kupplung für ein Fahrzeug dient dazu, den Kraftschluss zwischen dem Motor und dem Getriebe bei Schaltvorgängen des Getriebes vollständig zu trennen und beim Anfahren langsam aufzubauen. Sie enthält eine dem Motor zugeordnete Kupplungsscheibe und eine dem Getriebe zugeordnete Kupplungsscheibe. Beide Kupplungsscheiben sind mit Reibbelägen versehen und werden im geschlossenen Zustand der Kupplung durch eine Kupplungsreaktionskraft, die im Allgemeinen durch eine Feder bereitgestellt wird, aneinander gedrückt.

Ein Kupplungsaktuator überträgt eine der Kupplungsreaktionskraft entgegengesetzte Ausrückkraft auf die Kupplung. Dadurch können die Kupplungsscheiben voneinander getrennt werden, so dass der Kraftschluss zwischen Motor und Getriebe unterbrochen wird. Die Kupplung kann zum Anfahren aber auch in einen Schlupfzustand überführt werden, in dem die Kupplungsscheiben aneinander reiben und nur ein frei wählbarer Teil des vom Motor bereitgestellten Drehmoments auf das Getriebe übertragen wird. Durch das Reiben verschleißen die Reibbeläge und werden mit der Zeit dünner, so dass sich die kinematische Anlenkungsbedingung zwischen dem Kupplungsaktuator und der Kupplung ändert. Der Kupplungsaktuator muss daher im Wege eines Längenausgleichs ständig dahingehend nachjustiert werden, dass er bei Betätigung der Kupplung die Ausrückkraft spielfrei auf die Kupplung überträgt. Dabei muss diese Justage mechanisch so stabil sein, dass sie durch die Einwirkung der Ausrückkraft nicht verändert wird.

Aus der WO 2012 119 612 A1 ist ein Kupplungsaktuator bekannt, bei dem ein Aktuatorkolben durch eine Hilfsenergiequelle mit der Ausrückkraft beaufschlagt wird und diese Ausrückkraft über eine Kolbenstange auf die Kupplung überträgt. Für den Längenausgleich ist die Kolbenstange, die ein Bewegungsaußengewinde aufweist, über ein Zwischenstück mit einem dazu korrespondierenden Bewegungsinnengewinde an den Aktuatorkolben gekoppelt. Die Gesamtlänge von Kolbenlänge und Zwischenstück wird automatisch nachjustiert, indem im geschlossenen Zustand der Kupplung die verdrehgesichert gelagerte Kolbenstange durch die Kupplungsreaktionskraft in das Zwischenstück geschraubt wird, wobei das Zwischenstück zwangsläufig in Drehung versetzt wird. Der Aktuatorkolben weist einen Blockierbereich auf, der bei Betätigung der Kupplung in einen Reibschluss mit einem dazu korrespondierenden Bereich am Zwischenstück geht und die Drehbewegung des Zwischenstücks sperrt. Über die ineinandergreifenden Bewegungsgewinde und die Verdrehsicherung der Kolbenstange ist somit eine Relativbewegung zwischen Kolbenstange und Zwischenstück gesperrt.

Die FR 2 995 374 A1 offenbart einen Kupplungsaktuator, der als KolbenZylindereinheit ausgeführt ist und dessen Kolben als Betätigungselement über eine Kolbenstange mit einer Ausrückvorrichtung auf eine Kupplung einwirkt. Dabei ist die Kolbenstange sowohl seitens der Ausrückvorrichtung als auch seitens des Betätigungselements über eine Gelenkverbindung mit jeweils konvex geformten Gelenktellem verbunden. Hierdurch kann ein Radialkraftausgleich der Kolbenstange realisiert werden.

Die US 3 946 858 A offenbart einen Kupplungsaktuator mit einem automatischen Verschleißausgleich, welcher innerhalb einer teilweise hohlen Kolbenstange ausgebildet ist und einen Stößel mit Konusabschnitt umfasst, der über Stahlkugeln nach Art einer Klemmeinrichtung eine radiale Kraft auf die Innenwandung einer Führungshülse ausübt.

Aus der GB 1 188 893 A geht eine andere technische Lösung für einen Kupplungsaktuator mit automatischem Verschleißausgleich hervor, welcher sich eines Hebelmechanismus bedient, um im Zusammenwirken mit einer Justageschraube einen Längenausgleich der Kolbenstange herbeizuführen.

### Aufgabe und Lösung

Aufgabe der vorliegenden Erfindung ist, den Kupplungsaktuator gemäß Stand der Technik dahingehend weiterzuentwickeln, dass er einfacher und mit weniger Bauteilen hergestellt werden kann.

Diese Aufgabe wird erfindungsgemäß gelöst durch einen Kupplungsaktuator gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde ein Kupplungsaktuator zur Übertragung einer Ausrückkraft F_{A} auf eine Ausrückvorrichtung einer Kupplung entwickelt. Dieser Kupplungsaktuator umfasst ein mit der Ausrückkraft F_{A} beaufschlagbares Betätigungselement sowie eine Kolbenstange zur Übertragung der Ausrückkraft F_{A} vom Betätigungselement auf die Ausrückvorrichtung. Dabei ist die Kolbenstange so gegen einen Verbindungsbereich des Betätigungselements gelagert, dass die Kolbenstange durch die Kupplungsreaktionskraft F_{K} der Kupplung gegen den Verbindungsbereich bewegbar ist. Die durch eine derartige Bewegung bewirkte Positionierung von Verbindungsbereich und Kolbenstange zueinander ist durch Beaufschlagung des Betätigungselements mit der Ausrückkraft F_{A} fixierbar.

Erfindungsgemäß ist das Betätigungselement zur zumindest teilweisen Umlenkung der Ausrückkraft F_{A} in eine zwischen dem Verbindungsbereich und der Kolbenstange wirksame Normalkraft F_{N} und/oder Radialkraft F_{R} ausgebildet. Diese Normalkraft F_{N} und/oder Radialkraft F_{R} fixiert die Positionierung von Verbindungsbereich (14, 24) und Kolbenstange (15, 25) zueinander.

Es wurde erkannt, dass auf diese Weise das gemäß Stand der Technik vorgesehene Zwischenstück eingespart werden kann. Es ist weiterhin kein separater Blockierungsbereich am Betätigungselement mehr nötig. Stattdessen wird genau an der Stelle, an der die Kolbenstange und der Verbindungsbereich zwecks Führung der gegenseitigen Bewegung ohnehin schon in Kontakt sind, die zusätzliche Normalkraft F_{N} und/oder Radialkraft F_{R} zur Fixierung der Positionierung eingeleitet.

Diese Art der Fixierung bietet weiterhin den Vorteil, dass sie unmittelbar bei Beaufschlagung des Betätigungselements mit der Ausrückkraft wirksam ist. Die Blockierung gemäß dem Stand der Technik wurde aktiviert, indem der Aktuatorkolben in eine Position bewegt wurde, in der sein Blockierbereich in den Reibschluss mit dem dazu korrespondieren Bereich am Zwischenstück ging. Zumindest für einen kurzen Moment war somit bei jeder Betätigung der Kupplung die Blockierung zunächst nicht wirksam, während der Aktuatorkolben den Totweg bis zur Herstellung des Reibschlusses am Blockierbereich zurücklegte. Bei einer plötzlichen starken Betätigung konnten somit die Kolbenstange und das Zwischenstück unabsichtlich gegeneinander bewegt und die diesbezügliche automatische Justage verschlechtert werden. Die zum Öffnen der Kupplung nötige Ausrückkraft F_{A} ist sehr groß und kann typischerweise oberhalb von 6000 N liegen.

Weiterhin kann, im Unterschied zum Stand der Technik, auch auf Gewinde an der Kolbenstange und am Verbindungsbereich verzichtet werden. In einer besonders vorteilhaften Ausgestaltung der Erfindung ist ein Außenumfang der Kolbenstange gegen einen Innenumfang des Verbindungsbereichs verschiebbar. Der Außenumfang der Kolbenstange und der Innenumfang des Verbindungsbereichs müssen nicht speziell bearbeitet sein; es können jeweils glatte Flächen sein, die beispielsweise gegeneinander gleiten oder aber ohne Berührung aneinander vorbeigleiten. Die Kupplungsstange und der Verbindungsbereich sind somit einfacher zu fertigen und weniger anfällig gegen Verschleiß.

Die erfindungsgemäße Fixierung wird jedoch auch in der Ausgestaltung genutzt, in der die Kolbenstange ein Bewegungsaußengewinde aufweist, das in ein Bewegungsinnengewinde am Verbindungsbereich eingreift. Die ineinander greifenden Bewegungsgewinde wandeln die durch die Kupplungsreaktionskraft F_{K} angetriebene Linearbewegung der Kolbenstange teilweise in eine Drehbewegung der Kolbenstange gegenüber dem Verbindungselement um. Hierbei steht über die Steigung der Gewinde ein zusätzlicher Freiheitsgrad zur Verfügung. In dieser Ausgestaltung bietet die erfindungsgemäße Fixierung den Vorteil, dass die Kolbenstange nicht mehr verdrehsicher gelagert sein muss.

Vorteilhaft sind Mittel zur Ausübung einer zwischen der Kolbenstange und dem Betätigungselement wirksamen Vorspannkraft F_{F}, die der Kupplungsreaktionskraft F_{K} der Kupplung entgegen wirkt, vorgesehen. Diese Mittel können beispielsweise eine Vorspannfeder umfassen. Die Vorspannkraft F_{F} hat für den Längenausgleich eine untergeordnete Bedeutung; mit ihr kann eingestellt werden, welcher Anpressdruck der beiden Kupplungsscheiben gegeneinander als der unbetätigte Zustand der Kupplung für die Zwecke des Längenausgleichs gilt. Hauptzweck der Vorspannkraft F_{F} ist, auch im unbetätigten Zustand des Kupplüngsaktuators eine gewisse Mindestkraft auf die Ausrückvorrichtung auszuüben und zu gewährleisten, dass kein Spiel zwischen der Kolbenstange und der Ausrückvorrichtung entsteht.

Erfindungsgemäss fixiert die Normalkraft F_{N} bzw. die Radialkraft F_{R} die Positionierung von Verbindungsbereich und Kolbenstange zueinander über einen selbstverstärkenden Reibschluss. Unter Selbstverstärkung wird in diesem Zusammenhang verstanden, dass der Betrag der Normalkraft F_{N} bzw. der Radialkraft F_{R} dem Betrag der Ausrückkraft F_{A} selbsttätig nachgeführt ist. Die Kolbenstange und der Verbindungsbereich werden dann nur mit dem jeweils nötigen Betrag an Normalkraft F_{N} bzw. Radialkraft F_{R} beansprucht, was die Bauteile schont.

In einer besonders vorteilhaften Ausgestaltung der Erfindung ist der Verbindungsbereich so am Betätigungselement gelagert, dass er durch eine lineare Bewegung des Betätigungselements in axialer Richtung der Kolbenstange radial in Richtung auf die Kolbenstange schwenkbar ist. Die Normalkraft F_{N} bzw. Radialkraft F_{R} ist dann proportional zur auf das Betätigungselement ausgeübten Ausrückkraft F_{A}. Die Proportionalitätskonstante ist durch die Geometrie der Lagerung festgelegt. Vorteilhaft ist der Verbindungsbereich als Verbindungselement ausgebildet und/oder Teil eines Verbindungselements, wobei dieses Verbindungselement durch die Kupplungsreaktionskraft F_{K} und/oder durch die Vorspannkraft F_{F} an einem Anschlag am Betätigungselement fixierbar ist. Eine getrennte Fertigung von Betätigungselement und Verbindungselement kann einfacher sein als eine einstückige Fertigung eines Betätigungselements mit integriertem Verbindungselement. Auch die Montage ist einfach. Dabei wird im Endeffekt die gleiche Wirkung erzielt, als wären Betätigungselement und Verbindungselement eine einstückige Einheit. Dies gilt im Besonderen dann, wenn das Verbindungselement durch die typischerweise große Kupplungsreaktionskraft F_{K} fixiert ist.
In einer weiteren vorteilhaften Ausgestaltung der Erfindung ist der Verbindungsbereich als Verbindungselement ausgebildet, das am Betätigungselement schwenkbar angelagert ist. Dabei können das Verbindungselement und das Betätigungselement insbesondere aus dem gleichen Material bestehen, und das Verbindungselement kann zusammen mit dem Betätigungselement als ein einziges Bauteil realisiert sein. Beispielsweise kann eine Kombination eines Betätigungselements mit über ein Festkörpergelenk daran angelagertem Verbindungselement einstückig gefertigt werden. Das Verbindungselement kann jedoch auch ein separates Bauteil sein, das über ein Scharnier oder eine ähnliche Verbindung am Betätigungselement angelagert ist. Derartige Verbindungen sind.aufwändiger zu fertigen, jedoch dauerhaltbarer als Festkörpergelenke, in denen das Material bei jeder Positionsveränderung auf Biegung beansprucht wird.

In einer besonders vorteilhaften Ausgestaltung der Erfindung ist eine Endanschlagposition vorgesehen, zu der das Betätigungselement bei eingerückter Kupplung Kontakt hat. Diese Endanschlagposition ist dann zum Einen ein fester Bezugspunkt für den Längenausgleich, der durch die Relativbewegung zwischen dem Verbindungsbereich und der Kolbenstange stattfindet. Zum Anderen können in einer weiteren besonders vorteilhaften Ausgestaltung der Erfindung Mittel zur Verminderung und/oder Aufhebung der Normalkraft FN und/oder der Radialkraft FR vorgesehen sein, die durch das Verbringen des Betätigungselements zur Endanschlagposition betätigbar sind. Der Längenausgleich durch die Relativbewegung zwischen der Kolbenstange und dem Verbindungsbereich, der im unbetätigten Zustand der Kupplung durch die Kupplungsreaktionskraft angetrieben wird, wird dann so wenig wie möglich durch Reibung zwischen dem Verbindungsbereich und der Kolbenstange behindert. Ein Beispiel für ein solches Mittel zur Verminderung und/oder Aufhebung der Normalkraft FN und/oder der Radialkraft FR ist ein am Betätigungselement schwenkbar gelagertes Verbindungselement, das bei eingerückter Kupplung eine Kontaktstelle des Betätigungselements zur Endanschlagposition bildet.

In einer weiteren besonders vorteilhaften Ausgestaltung der Erfindung ist das Betätigungselement als Kolben ausgebildet, der in einem Gehäuse verschiebbar gelagert ist und in diesem Gehäuse einen Druckraum abschließt. Das Betätigungselement ist dann durch Einbringen eines Druckmittels in den Druckraum mit der Ausrückkraft beaufschlagbar. Gerade bei Nutzfahrzeugkupplungen sind zum Teil große Kräfte aufzubringen, so dass die Betätigung mit der Fußkraft des Fahrers allein auf die Dauer anstrengend ist. Diese Fußkraft lässt sich jedoch durch Pneumatik oder Hydraulik mit einfachen Mitteln vielfach verstärken und anschließend durch das Druckmittel in den Druckraum einleiten. Weiterhin kann auch eine elektronisch gesteuerte Kupplung ("clutch by wire"), beispielsweise in automatisierten Schaltgetrieben, die Ausrückkraft durch Einbringen eines Druckmittels in den Druckraum zum Betätigungselement leiten.

Die Erfindung, und insbesondere der Längenausgleich, funktioniert jedoch völlig analog, wenn eine andere Kraftquelle für die Beaufschlagung des Betätigungselements mit der Ausrückkraft genutzt wird. Beispielsweise kann das Betätigungselement einer elektronisch gesteuerten Kupplung ("clutch by wire") auch elektromechanisch, etwa durch einen Motor, bewegbar sein.

Die Notwendigkeit eines Längenausgleichs ist bei Nutzfahrzeugen ausgeprägter als bei PKW. Da die Kupplungsreaktionskraft F_{K} bei einer Nutzfahrzeugkupplung wesentlich größer ist als bei einer Kupplung für PKW, sind typischerweise in der Wirkkette zwischen der Kolbenstange und den Kupplungsscheiben mehrere mechanische Übersetzungen angeordnet, die die nötige Ausrückkraft F_{A} vermindern und im Gegenzug den nötigen Betätigungsweg verlängern. Damit übersetzt sich ein Belagverschleiß der Größenordnung 5 bis 8 mm in einen nötigen Längenausgleich der Größenordnung 60 bis 65 mm. Dieser Längenausgleich kann somit deutlich größer sein als der für den Übergang von einer voll geschlossenen zu einer voll geöffneten Kupplung nötige Betätigungsweg des Betätigungselements, der beispielsweise in der Größenordnung 20 bis 30 mm liegen kann.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des erfindungsgemäßen Kupplungsaktuators mit ineinander eingreifenden Bewegungsgewinden an Kolbenstange und Verbindungsbereich.
Figur 2: Ausführungsbeispiel des erfindungsgemäßen Kupplungsaktuators ohne Gewinde an Kolbenstange und Verbindungsbereich.

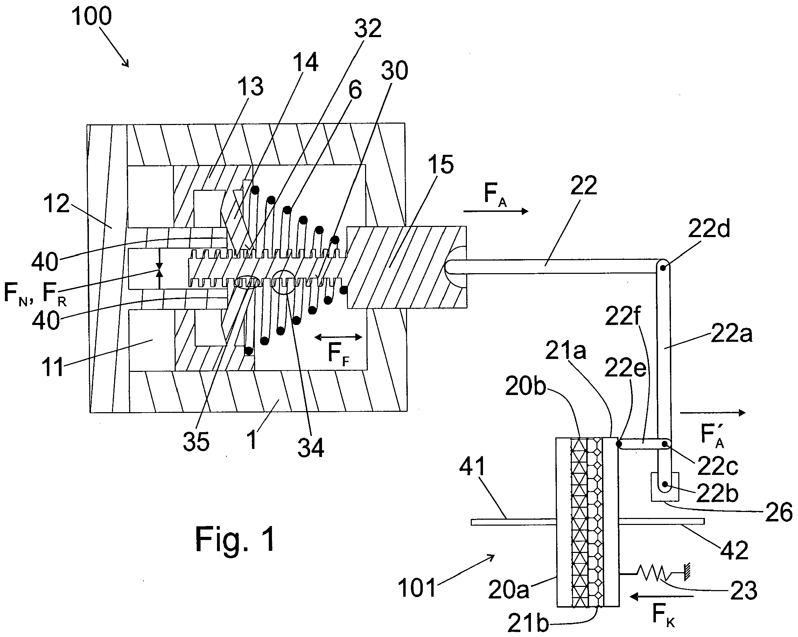

Figur 1 zeigt ein erstes Ausfuhrungsbeispiel des erfindungsgemäßen Kupplungsaktuators 100. Wesentliches Merkmal ist hierbei, dass eine Funktionsintegration der beiden Teilfunktionen "Längenausgleich" und "Blockierung Längenausgleich" in die Bauteile Verbindungselement 14 und Kolbenstange 15 erfolgt, und zwar genau an der Stelle, an der diese beiden Bauteile zwecks Führung der gegenseitigen Relativbewegung ohnehin Kontakt zueinander haben.

Die Funktionsweise hierbei stellt sich wie folgt dar. Das als Kolben ausgebildete Betätigungselement 13 ist in einem Gehäuse 1 radial gelagert und in Richtung eines resultierenden Druckraums abgedichtet. Das Gehäuse 1 mit seinem Deckel 12 sowie der Kolben 13 schließen einen Druckraum 11 ein. Mittels einer Hilfsenergie, die dem Druckraum 11 in Form eines Druckmittels zugeführt wird, wird die Ausrückkraft F_{A} auf den Kolben 13 ausgeübt. Diese Kraft stützt sich im Unterschied zum Stand der Technik formschlüssig auf dem als Klemmelement ausgebildeten Verbindungselement 14 ab. Das Klemmelement 14 besitzt an seinem Innenumfang 32 ein Bewegungsinnengewinde 35, mit dem es in formschlüssigem Kontakt mit einem entsprechenden Bewegungsaußengewinde 34 am Außenumfang 30 der Kolbenstange 15 steht. Ferner besteht in radialer Richtung ein reibschlüssiger Kontakt zwischen Klemmelement 14 und Kolbenstange 15. Dieser Reibschluss kann, muss jedoch nicht, bereits im unbetätigten Zustand des Kupplungsaktuators 100 vorhanden sein. Bei Betätigung des Kupplungsaktuators 100 entsteht eine der Aktuatorkraft proportionale Radialkraft F_{R} am Klemmelement 14, die einen entsprechenden selbstverstärkenden Reibschluss zwischen Klemmelement 14 und Kolbenstange 15 sicherstellt und einen Längenausgleich zwischen Kolben 13 und Kolbenstange 15 während der Betätigung des Kupplungsaktuators 100 verhindert. Die Kolbenstange 15 überträgt im Weiteren die Aktuatorkraft bzw. den entsprechenden Weg des Kolbens 13 über einen Ausrückhebel 22 auf die Kupplung 101. Im unbetätigten Zustand des Kupplungsaktuators 100 wird die Kupplungsreaktionskraft F_{K} über den Ausrückhebel 22 auf die Kolbenstange 15 geleitet. Die dort angreifende Vorlastfeder 6 schiebt den Kolben 13 soweit in Richtung des Deckels 12, bis das Klemmelement 14 an der am Deckel 12 angeordneten Endanschlagposition 40 derart anliegt, dass die Radialkraft F_{R} und damit der Reibschluss in radialer Richtung zwischen Klemmelement 14 und Kolbenstange 15 aufgehoben wird. Hierzu sind die Bauteile derart ausgelegt, dass die von der Endanschlagsposition auf das Klemmelement 14 ausgeübte Kraft zu einem radialen Öffnen oder Entlasten der entsprechenden Funktionsfläche am Klemmelement 14 führt.

Die Kupplung 101 umfasst eine dem Motor zugeordnete Kupplungsscheibe 20a mit einem Reibbelag 20b sowie eine dem Getriebe zugeordnete Kupplungsscheibe 21a mit einem Reibbelag 21b. Die beiden Kupplungsscheiben 20a und 21a werden durch die Rückstellfeder 23, die die Kupplungsreaktionskraft F_{K} ausübt, aneinander gedrückt. Sie können durch Bewegung des Ausrückhebels 22 entgegen der Kraft der Rückstellfeder 23 voneinander getrennt oder in einen Schlupfzustand zueinander überführt werden.

Eine von der Kupplung 101 herrührende kinematische Veränderung durch Belagverschleiß, welche einen Längenausgleich zwischen Kolben 13 und Kolbenstange 15 erfordert, kann somit über das Bewegungsgewinde der Bauteile Klemmelement 14 und Kolbenstange 15 erfolgen. Während der Betätigungsphasen wird hingegen eine Blockierung des Nachstellmechanismus durch die reibschlüssige Verbindung zwischen Klemmelement 14 und Kolbenstange 15 sichergestellt, indem ein Längenausgleich zwischen Kolben 13 und Kolbenstange 15 über das Bewegungsgewinde in den Bauteilen Klemmelement 14 und Kolbenstange 15 verhindert wird.

Die dem Motor zugeordnete Welle 41 und die dem Getriebe zugeordnete Welle 42, zwischen denen die Kupplung 101 im geschlossenen Zustand einen Kraftschluss hergestellt, sind gegen die Längsachse des Ausrückhebels 22 und der Kolbenstange 15 versetzt. Zu diesem Zweck betätigt der Ausrückhebel 22 die Kupplung 101 nicht unmittelbar, sondern vermittelt durch ein Hebelgestänge, das die Elemente 22a und 22f umfasst. Der Ausrückhebel 22 ist über ein Gelenk 22d schwenkbar gegen das Element 22a gelagert. Das Element 22a ist an seinem anderen Ende mit einem Gelenk 22b gegen einen festen Punkt 26 schwenkbar gelagert. Mit einem weiteren Gelenk 22c ist an dem Element 22a das Element 22f schwenkbar gelagert. Das Element 22f ist am Punkt 22e an der Kupplungsscheibe 21a angelenkt. Das Hebelgestänge versetzt nicht nur die Achse, in der die Ausrückkraft F_{A} wirkt, sondern verstärkt diese Kraft F_{A} durch die Hebelwirkung zu einer Kraft F_{A}. Mit dem gleichen Hebelverhältnis wird der Weg, um den die Kolbenstange 15 zur Betätigung der Kupplung bewegt werden muss, vergrößert.

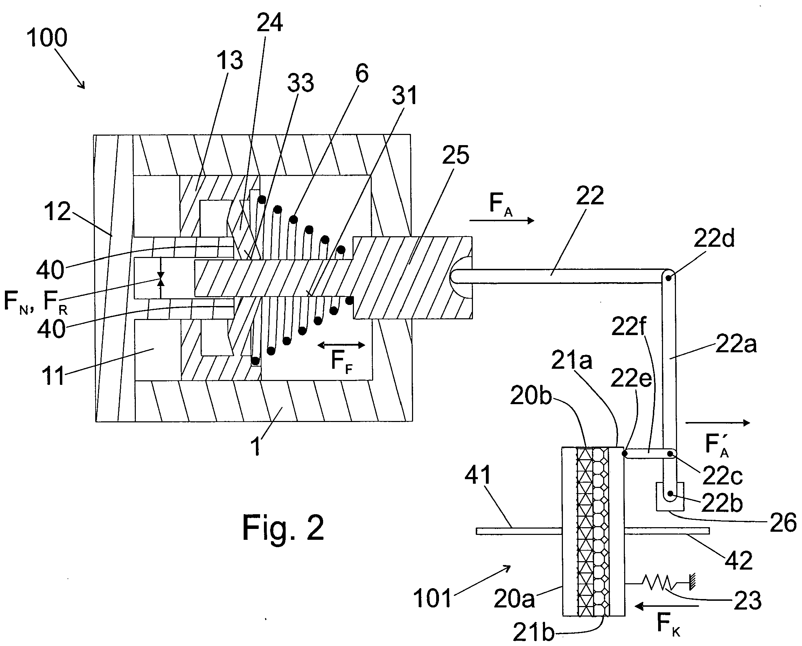

Figur 2 zeigt ein weiteres Ausführungsbeispiel des erfindungsgemäßen Kupplungsaktuators 100. Wesentliches Merkmal ist hierbei neben einer Funktionsintegration der beiden Teilfunktionen "Längenausgleich" und "Blockierung Längenausgleich" in die Bauteile Klemmelement 24 und Kolbenstange 25, wie bereits in Figur 1 für das Klemmelement 14 gezeigt, dass Bewegungsgewinde 34, 35 für den Längenausgleich entbehrlich werden. Dadurch wird die Komplexität des Kupplungsaktuators 100 weiter reduziert.
Die Funktionsweise hierbei stellt sich wie folgt dar. Das als Kolben ausgebildete Betätigungselement 13 ist in einem Gehäuse 1 radial gelagert und in Richtung eines resultierenden Druckraums 11 abgedichtet. Der Druckraum 11 wird umschlossen von den Bauteilen Gehäuse 1, Deckel 12 des Gehäuses 1 und Kolben 13. Mittels einer Hilfsenergie, die dem Druckraum 11 in Form eines Druckmittels zugeführt wird, wird die Ausrückkraft F_{A} auf den Kolben 13 ausgeübt. Diese Kraft stützt sich, analog dem in Figur 1 gezeigten Ausführungsbeispiel, formschlüssig auf dem Klemmelement 24 ab. Es besteht in radialer Richtung ein reibschlüssiger Kontakt zwischen Klemmelement 24 und Kolbenstange 25. Dieser Reibschluss kann, muss jedoch nicht, bereits im unbetätigten Zustand des Kupplungsaktuators 100 vorhanden sein. Bei Betätigung des Kupplungsaktuators 100 entsteht eine der Aktuatorkraft proportionale Radialkraft F_{R} am Klemmelement 24, die einen entsprechenden selbstverstärkenden Reibschluss zwischen Klemmelement 24 und Kolbenstange 25 sicherstellt und einen Längenausgleich zwischen Kolben 13 und Kolbenstange 25 während der Betätigung des Kupplungsaktuators 100 verhindert. Die Kolbenstange 25 überträgt im Weiteren die Aktuatorkraft bzw. den entsprechenden Weg des Kolbens 13 über einen Ausrückhebel 22 auf die Kupplung 101. Im unbetätigten Zustand des Kupplungsaktuators 100 wird die Kupplungsreaktionskraft F_{K} über den Ausrückhebel 22 auf die Kolbenstange 25 geleitet. Die dort angreifende Vorlastfeder 6 schiebt den Kolben 13 soweit in Richtung des Deckels 12, bis das Klemmelement 24 an der am Deckel 12 angeordneten Endanschlagposition derart anliegt, dass die Radialkraft FR und damit der Reibschluss in radialer Richtung zwischen Klemmelement 24 und Kolbenstange 25 aufgehoben wird. Hierzu sind die Bauteile derart ausgelegt, dass die von der Endanschlagsposition auf das Klemmelement 24 ausgeübte Kraft zu einem radialen Öffnen oder Entlasten der entsprechenden Funktionsfläche am Klemmelement 24 führt. Der glatte Außenumfang 31 der Kolbenstange 25 kann dann für den Längenausgleich frei gegen den dazu korrespondierenden glatten Außenumfang 33 des Verbindungselements 24 gleiten.

Die Kupplung 101 ist die gleiche wie im in Figur 1 gezeigten Ausführungsbeispiel. Sie wird auch in gleicher Weise vom Ausrückhebel 22 über das Hebelgestänge aus den Elementen 22a und 22f betätigt, so dass die Achsen der dem Motor zugeordneten Welle 41 und der dem Getriebe zugeordneten Welle 42 wiederum gegen die Längsachse des Ausrückhebels 22 und der Kolbenstange 25 versetzt sind. Eine von der Kupplung her rührende kinematische Veränderung durch Belagverschleiß, welche einen Längenausgleich zwischen Kolben (13) und Kolbenstange 25 erfordert, kann zwischen den mit ihren jeweiligen Funktionsflächen gegeneinander gleitenden Bauteilen Klemmelement 24 und Kolbenstange 25 erfolgen. Während der Betätigungsphasen wird hingegen eine Blockierung des Nachstellmechanismus durch die reibschlüssige Verbindung zwischen Klemmelement 24 und Kolbenstange 25 sichergestellt, indem ein Längenausgleich zwischen Kolben 13 und Kolbenstange 25 durch den Reibschluss zwischen den Bauteilen Klemmelement 24 und Kolbenstange 25 verhindert wird. Gegenüber dem in Figur 1 gezeigten Ausführungsbeispiel wird eine höhere Radialkraft F_{R} benötigt, da eine Drehung zweier mit Bewegungsgewinden versehener Bauteile gegeneinander leichter blockiert werden kann als ein Gleiten zweier Bauteile gegeneinander. Die höhere Radialkraft F_{R} kann bei gleicher Ausrückkraft F_{A} durch eine gegenüber dem Klemmelement 14 angepasste Auslegung des Klemmelements 25 bereitgestellt werden.

### Bezugszeichenliste

- 1: Gehäuse
- 11: Druckraum im Gehäuse 1
- 12: Deckel des Gehäuses 1
- 13: Betätigungselement, Kolben
- 14, 24: Verbindungselemente, Klemmelemente
- 15,25: Kolbenstangen
- 6: Vorlastfeder
- 20a, 21a: Kupplungsscheiben der Kupplung 101
- 20b, 21b: Reibbeläge der Kupplungsscheiben 20a, 21a
- 22: Ausrückhebel der Kupplung 101
- 22a, 22f: Elemente des Hebelgestänges für die Kupplungsbetätigung
- 22b, 22c, 22d: Gelenke
- 22e: Anlenkpunkt an der Kupplungsscheibe 21a
- 23: Rückstellfeder der Kupplung 101 für Kupplungsreaktionskraft F_{K}
- 26: Fester Lagerungspunkt für Element 22a
- 30: Außenumfang der Kolbenstange 15
- 31: Außenumfang der Kolbenstange 25
- 32: Innenumfang des Verbindungsbereichs 14
- 33: Innenumfang des Verbindungsbereichs 15
- 34: Bewegungsaußengewinde der Kolbenstange 15
- 35: Bewegungsinnengewinde des Verbindungselements 14
- 40: Endanschlagposition für das Betätigungselement 13
- 41: dem Motor zugeordnete Welle
- 42: dem Getriebe zugeordnete Welle
- 100: Kupplungsaktuator
- 101: Kupplung
- F_{A}: Ausrückkraft
- F_{A}: durch Hebelwirkung verstärke Ausrückkraft F_{A}
- F_{F}: Vorspannkraft
- F_{K}: Kupplungsreaktionskraft
- F_{N}: Normalkraft
- F_{R}: Radialkraft

## Patentansprüche

1. Kupplungsaktuator (100) zur Übertragung einer Ausrückkraft F_{A} auf eine Ausrückvorrichtung (22) einer Kupplung (101), umfassend ein mit der Ausrückkraft F_{A} beaufschlagbares Betätigungselement (13, 14, 24) sowie eine Kolbenstange (15, 25) zur Übertragung der Ausrückkraft F_{A} vom Betätigungselement (13, 14, 24) auf die Ausrückvorrichtung (22), wobei die Kolbenstange (15, 25) so gegen einen Verbindungsbereich (14, 24) des Betätigungselements (13, 14, 24) gelagert ist, dass die Kolbenstange (15, 25) durch die Kupplungsreaktionskraft F_{K} der Kupplung (101) gegen den Verbindungsbereich (14, 24) bewegbar ist, und wobei die durch eine derartige Bewegung bewirkte Positionierung von Verbindungsbereich (14, 24) und Kolbenstange (15, 25) zueinander durch Beaufschlagung des Betätigungselements (13, 14, 24) mit der Ausrückkraft F_{A} fixierbar ist, wobei das Betätigungselement (13, 14, 24) zur zumindest teilweisen Umlenkung der Ausrückkraft F_{A} in eine zwischen dem Verbindungsbereich (14, 24) und der Kolbenstange (15, 25) wirksame Normalkraft F_{N} und/oder Radialkraft F_{R} ausgebildet ist, wobei diese Normalkraft F_{N} und/oder Radialkraft F_{R} die Positionierung von Verbindungsbereich (14, 24) und Kolbenstange (15, 25) zueinander fixiert, **gekennzeichnet, dass** die Kolbenstange (15, 25) ein Bewegungsaußengewinde (34) aufweist, das in ein Bewegungsinnengewinde (35) am Verbindungsbereich (14) eingreift, wobei die Normalkraft F_{N} bzw. die Radialkraft F_{R} die Positionierung von Verbindungsbereich (14, 24) und Kolbenstange (15, 25) zueinander über einen selbstverstärkenden Reibschluss fixiert.

2. Kupplungsaktuator (100) nach Anspruch 1, **dadurch gekennzeichnet, dass** ein Außenumfang (30, 31) der Kolbenstange (15, 25) gegen einen Innenumfang (32, 33) des Verbindungsbereichs (14, 24) verschiebbar ist.

3. Kupplungsaktuator (100) nach einem der Ansprüche 1 bis 2, **dadurch gekennzeichnet, dass** Mittel (6) zur Ausübung einer zwischen der Kolbenstange (15, 25) und dem Betätigungselement (13, 14, 24) wirksamen Vorspannkraft F_{F}, die der Kupplungsreaktionskraft F_{K} der Kupplung (101) entgegen wirkt, vorgesehen sind.

4. Kupplungsaktuator (100) nach einem der Ansprüche 1 bis 3, **dadurch gekennzeichnet, dass** der Verbindungsbereich (14, 24) so am Betätigungselement (13) gelagert ist, dass er durch eine lineare Bewegung des Betätigungselements (13) in axialer Richtung der Kolbenstange (15, 25) radial in Richtung auf die Kolbenstange schwenkbar ist.

5. Kupplungsaktuator (100) nach einem der Ansprüche 1 bis 4, **dadurch gekennzeichnet, dass** der Verbindungsbereich (14, 24) als Verbindungselement ausgebildet und/oder Teil eines Verbindungselements ist, wobei dieses Verbindungselement durch die Kupplungsreaktionskraft F_{K} und/oder durch die Vorspannkraft F_{F} an einem Anschlag am Betätigungselement (13) fixierbar ist.

6. Kupplungsaktuator (100) nach einem der Ansprüche 1 bis 5, **dadurch gekennzeichnet, dass** der Verbindungsbereich (14, 24) als Verbindungselement ausgebildet ist, das am Betätigungselement (13) schwenkbar gelagert ist.

7. Kupplungsaktuator (100) nach einem der Ansprüche 1 bis 6, **dadurch gekennzeichnet, dass** eine Endanschlagposition (40) vorgesehen ist, zu der das Betätigungselement (13, 14, 24) bei eingerückter Kupplung (101) Kontakt hat.

8. Kupplungsaktuator (100) nach Anspruch 7, **dadurch gekennzeichnet, dass** Mittel zur Verminderung und/oder Aufhebung der Normalkraft F_{N} und/oder der Radialkraft F_{R} vorgesehen sind, die durch Verbringen des Betätigungselements (13, 14, 24) zur Endanschlagposition (40) betätigbar sind.

9. Kupplungsaktuator (100) nach Anspruch 8, **dadurch gekennzeichnet, dass** ein Mittel zur Verminderung und/oder Aufhebung der Normalkraft F_{N} und/oder der Radialkraft F_{R} ein Verbindungselement (14, 24) ist, das am Betätigungselement (13) schwenkbar gelagert ist.

10. Kupplungsaktuator (100) nach einem der Ansprüche 1 bis 9, **dadurch gekennzeichnet, dass** das Betätigungselement (13, 14, 24) als Kolben ausgebildet ist, der in einem Gehäuse (1) verschiebbar gelagert ist und in diesem Gehäuse (1) einen Druckraum (11) abschließt, so dass das Betätigungselement (13, 14, 24) durch Einbringen eines Druckmittels in den Druckraum (11) mit der Ausrückkraft F_{A} beaufschlagbar ist.

## Claims

1. Clutch actuator (100) for transmitting a disengaging force F_{A} to a disengaging device (22) of a clutch (101), comprising an actuating element (13, 14, 24) that can be subjected to the disengaging force F_{A} and a piston rod (15, 25) for transmitting the disengaging force F_{A} from the actuating element (13, 14, 24) to the disengaging device (22), wherein the piston rod (15, 25) is mounted against a connecting region (14, 24) of the actuating element (13, 14, 24) so that the piston rod (15, 25) can be moved against the connecting region (14, 24) through the clutch reaction force F_{K} of the clutch (101), and wherein the positioning of connecting region (14, 24) and piston rod (15, 25) relative to one another brought about by such a movement can be fixed by subjecting the actuating element (13, 14, 24) to the disengaging force F_{A}, wherein the actuating element (13, 14, 24) is designed for the at least partial deflection of the disengaging force F_{A} into a normal force F_{N} and/or radial force F_{R} that is effective between the connecting region (14, 24) and the piston rod (15, 25), wherein this normal force F_{N} and/or radial force F_{R} fixes the positioning of connecting region (14, 24) and piston rod (15, 25) relative to one another, **characterized in that** the piston rod (15, 25) has an external transmission thread (34), which engages in an internal transmission thread (35) on the connecting region (14), wherein the normal force F_{N} or the radial force F_{R} fixes the positioning of connecting region (14, 24) and piston rod (15, 25) relative to one another via a self-amplifying frictional connection.

2. Clutch actuator (100) according to Claim 1, **characterized in that** an outer circumference (30, 31) of the piston rod (15, 25) is slideable against an inner circumference (32, 33) of the connecting region (14, 24).

3. Clutch actuator (100) according to one of Claims 1 to 2, **characterized in that** means (6) for exerting a preload force F_{F} that is effective between the piston rod (15, 25) and the actuating element (13, 14, 24), said preload force counteracting the clutch reaction force F_{K} of the clutch (101), are provided.

4. Clutch actuator (100) according to one of Claims 1 to 3, **characterized in that** the connecting region (14, 24) is mounted on the actuating element (13) so that said connecting region can be radially pivoted in the direction of the piston rod through a linear movement of the actuating element (13) in the axial direction of the piston rod (15, 25).

5. Clutch actuator (100) according to one of Claims 1 to 4, **characterized in that** the connecting region (14, 24) is designed as a connecting element and/or is part of a connecting element, wherein this connecting element can be fixed against a stop on the actuating element (13) through the clutch reaction force F_{K} and/or through the preload force F_{F}.

6. Clutch actuator (100) according to one of Claims 1 to 5, **characterized in that** the connecting region (14, 24) is designed as a connecting element, which is pivotably mounted on the actuating element (13).

7. Clutch actuator (100) according to one of Claims 1 to 6, **characterized in that** an end stop position (40) is provided, with which the actuating element (13, 14, 24) is in contact when the clutch (101) is engaged.

8. Clutch actuator (100) according to Claim 7, **characterized in that** means for reducing and/or eliminating the normal force F_{N} and/or the radial force F_{R} are provided, said means being actuatable by bringing the actuating element (13, 14, 24) into the end stop position (40).

9. Clutch actuator (100) according to Claim 8, **characterized in that** a means for reducing and/or eliminating the normal force F_{N} and/or the radial force F_{R} is a connecting element (14, 24), which is pivotably mounted on the actuating element (13).

10. Clutch actuator (100) according to one of Claims 1 to 9, **characterized in that** the actuating element (13, 14, 24) is designed as a piston, which is displaceably mounted in a housing (1) and, in this housing (1), closes off a pressure chamber (11), so that the actuating element (13, 14, 24) can be subjected to the disengaging force F_{A} by introducing a pressure medium into the pressure chamber (11).

## Revendications

1. Actionneur (100) d'embrayage pour transmettre une force F_{A} de débrayage à un dispositif (22) de débrayage d'un embrayage (101), comprenant un élément (13, 14, 24) d'actionnement pouvant être soumis à la force F_{A} de débrayage, ainsi qu'une tige (15,25) de piston pour transmettre la force F_{A} de l'élément (13, 14, 24) d'actionnement au dispositif (22) de débrayage, la tige (15, 25) de piston étant montée contre une partie (14, 24) de liaison de l'élément (13, 14, 24) d'actionnement, de manière à ce que la tige (15, 25) du piston puisse, par la force F_{A} de réaction de l'embrayage (101), être déplacée contre la partie (14, 24) de liaison, et dans lequel le positionnement, provoqué par un déplacement de ce genre, de la partie (14, 24) de liaison et de la tige (15, 25) de piston l'une par rapport à l'autre, peut être fixé en soumettant l'élément (13, 14, 24) d'actionnement à la force F_{A} de débrayage, l'élément (13, 14, 24) d'actionnement étant constitué pour renvoyer, au moins en partie, la force F_{A} de débrayage en un force F_{N} normale et/ou en une force F_{R} radiale efficace entre la partie (14, 24) de liaison et la tige (15, 25) du piston, cette force F_{N} normale et/ou cette force F_{R} radiale fixant le positionnement de la partie (14, 24) de liaison et de la tige (15, 25) du piston l'une par rapport à l'autre, **caractérisé en ce que** la tige (15, 25) du piston a un filetage (34) extérieur de déplacement, qui pénètre dans un taraudage (35) de déplacement de la partie (14) de liaison, la force F_{N} normale ou la force F_{R} radiale fixant le positionnement de la partie (14, 24) de liaison et de la tige (15, 25) de liaison l'une par rapport à l'autre par une complémentarité de frottement autorenforçante.

2. Actionneur (100) d'embrayage suivant la revendication 1, **caractérisé en ce que** le pourtour (30, 31) extérieur de la tige (15, 25) du piston peut coulisser contre un pourtour (32, 33) intérieur de la partie (14, 24) de liaison.

3. Actionneur (100) d'embrayage suivant l'une des revendications 1 à 2, **caractérisé en ce qu'**il est prévu des moyens (6) pour appliquer une force F_{F} de précontrainte efficace entre la tige (15, 25) du piston et l'élément (13, 14, 24) d'actionnement, force qui s'oppose à la force F_{A} de réaction de l'embrayage (101).

4. Actionneur (100) d'embrayage suivant l'une des revendications 1 à 3, **caractérisé en ce que** la partie (14, 24) de liaison est montée sur l'élément (13) d'actionnement, de manière à pouvoir pivoter radialement en direction de la tige du piston par un déplacement linéaire de l'élément (13) d'actionnement dans la direction axiale de la tige (15, 25) du piston.

5. Actionneur (100) d'embrayage suivant l'une des revendications 1 à 4, **caractérisé en ce que** la partie (14, 24) de liaison est constituée en élément de liaison et/ou en partie d'un élément de liaison, cet élément de liaison pouvant être immobilisé sur une butée de l'élément (13) d'actionnement par la force F_{K} de réaction de l'embrayage et/ou par la force F_{F} de précontrainte.

6. Actionneur (100) d'embrayage suivant l'une des revendications 1 à 5, **caractérisé en ce que** la partie (14, 24) de liaison est constituée en élément de liaison, qui est montée pivotant sur l'élément (13) d'actionnement.

7. Actionneur (100) d'embrayage suivant l'une des revendications 1 à 6, **caractérisé en ce qu'**il est prévu une position (40) de fin de course, pour laquelle l'élément (13, 14, 24) d'actionnement a un contact, lorsque le débrayage (101) est débrayé.

8. Actionneur (100) d'embrayage suivant la revendication 7, **caractérisé en ce qu'**il est prévu des moyens de diminution et/ou d'augmentation de la force F_{N} normale et/ou de la force F_{R} radiale, qui peuvent être actionnés en mettant l'élément (13, 14, 24) d'actionnement à la position (40) de fin de course.

9. Actionneur (100) d'embrayage suivant la revendication 8, **caractérisé en ce qu'**un moyen pour diminuer et/ou d'augmenter la force F_{N} normale et/ou la force F_{R} radiale est un élément (14, 24) de liaison, qui est monté pivotant sur l'élément (13) d'actionnement.

10. Actionneur (100) d'embrayage suivant l'une des revendications 1 à 9, **caractérisé en ce que** l'élément (13, 14, 24) d'actionnement est constitué en piston, qui est monté coulissant dans un boîtier (1) et qui, dans ce boîtier (1) ferme un espace (11) sous pression, de manière à ce que l'élément (13, 14, 24) d'actionnement puisse, par introduction d'un fluide sous pression dans l'espace (11) sous pression, être soumis à la force F_{A} de débrayage.
